# EUROPEAN PATENT APPLICATION

(11) **EP 4 632 844 A1**
(43) Date of publication of application: **15.10.2025**
(21) Application number: 23900945.9
(22) Date of filing: 17.11.2023
(51) Int. Cl.: H01M 4/525, H01M 4/505, H01M 4/36, C01G 53/00, H01M 10/052, H01M 4/02

(54) **POSITIVE ELECTRODE ACTIVE MATERIAL FOR RECHARGEABLE LITHIUM BATTERY, METHOD OF PREPARING SAME, AND RECHARGEABLE LITHIUM BATTERY INCLUDING SAME**

(30) Priority: 08.12.2022 KR 20220170876
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: JUNG, Yongjo, Incheon 22002 (KR); HONG, Ki Joo, Incheon 21986 (KR); LEE, Jiho, Incheon 22008 (KR); KIM, Ju Seong, Seoul 07542 (KR); PARK, Jong Il, Pohang-si, Gyeongsangbuk-do 37680 (KR); CHANG, Joon Ha, Incheon 21982 (KR); NAM, Sang Cheol, Seoul 02587 (KR)
(74) Representative: Pfenning, Meinig & Partner mbB
(86) International application number: PCT/KR2023/018597
(87) International publication number: WO 2024/122926

(57) **Abstract**

The present embodiments relate to a positive electrode active material, a method for manufacturing the same, and a lithium secondary battery comprising the same. The positive electrode active material according to an embodiment may have a single particle structure with a D50 of 2 to 7 µm, and the number of grains measured within one particle may be 20 or less as determined by ASTAR analysis.

## Description

### FIELD OF THE INVENTION

The present embodiments relate to a positive electrode active material for a lithium secondary battery, a method for manufacturing the same, and a lithium secondary battery including the same.

### DESCRIPTION OF THE RELATED ART

Recently, as environmental issues have become severe, electric vehicles have gained attention as one of the solutions to address these challenges. With the explosive demand for such electric vehicles and the increasing need for longer driving ranges, the development of secondary batteries with high capacity and high energy density has been actively pursued worldwide.

To meet these demands, research on NCM (Nickel-Cobalt-Manganese) positive electrode materials that can secure high capacity, especially NCM with high nickel content, is actively underway.

However, as the nickel content in NCM positive electrode materials increases, issues such as increased resistance, reduced output, and decreased lifespan arise.

Therefore, there is a need for the development of technology related to NCM positive electrode materials that have high nickel content while exhibiting excellent electrochemical performance.

### SUMMARY OF THE INVENTION

### TECHNICAL PROBLEM

The present embodiments aim to provide a positive electrode active material with excellent lifespan characteristics, reduced resistance increase rate, and decreased gas generation, a method for manufacturing the same, and a lithium secondary battery including the same.

### TECHNICAL SOLUTION

In one embodiment, the positive electrode active material has a single particle structure with a D50 of 2 to 7 µm, and the number of grains measured within one particle is 20 or less as determined by ASTAR analysis.

Specifically, in this embodiment, the number of grains measured within one particle by ASTAR analysis may be in the range of 5 to 20.

The grain size of the positive electrode active material may be in the range of 500 nm to 5 µm.

Additionally, the positive electrode active material may comprise a metal oxide particle containing nickel, cobalt, and manganese, and at least two doping elements doped into the metal oxide particles.

The doping elements may include at least two selected from the group consisting of Zr, Al, Nb, B, Ti, Ta, V, W, and Mo.

The doping amount of Zr may be in the range of 0.0005 mol to 0.005 mol per 1 mol of the total of nickel, cobalt, manganese, and doping elements.

The doping amount of Al may be in the range of 0.001 mol to 0.008 mol per 1 mol of the total of nickel, cobalt, manganese, and doping elements.

A method for manufacturing a positive electrode active material according to another embodiment includes the steps of:
preparing a metal salt aqueous solution containing nickel raw material, cobalt raw material, manganese raw material, and water;
supplying the metal salt aqueous solution to a coprecipitation reactor to obtain a metal hydroxide; and
mixing the metal hydroxide particle, a lithium raw material, and a doping raw material, followed by sintering to obtain a lithium metal oxide. The sintering step includes performing a first sintering process and continuously performing a second sintering process at a temperature range 50°C to 150°C lower than the first sintering process.

The first sintering process may be performed at a temperature range of 800°C to 890°C for 3 to 5 hours.

The second sintering process may be performed at a temperature range of 750°C to 800°C for 9 to 20 hours.

The first sintering process and the second sintering process may be performed as a continuous process maintaining a temperature difference of 50°C to 80°C.

Additionally, a coating process to form a coating layer on the surface of the positive electrode active material after the second sintering process may be further included.

The coating process may be performed to include 1 mol to 2 mol of a coating element based on the total positive electrode active material.

The coating elements included in the coating layer may comprise Co and Al.

A lithium secondary battery according to another embodiment may include a positive electrode comprising the positive electrode active material according to one embodiment.

### ADVANTAGEOUS EFFECTS

According to one embodiment, the degree of single particle formation can be measured using ASTAR images, allowing for the definition of single particle formation.

Additionally, when the degree of single particle formation is high according to the criteria defined in this embodiment, a positive electrode active material with excellent lifespan characteristics, reduced resistance increase rate, and decreased gas generation rate can be implemented.

### BRIEF DESCRIPTION OF THE DRAWINGS

FIG. 1 is a TEM image and ASTAR image of the positive electrode active material manufactured according to Example 1.
FIG. 2 is a TEM image and ASTAR image of the positive electrode active material manufactured according to Example 2.
FIG. 3 is a TEM image and ASTAR image of the positive electrode active material manufactured according to Example 3.
FIG. 4 is a TEM image and ASTAR image of the positive electrode active material manufactured according to Comparative Example 1.

### DETAILED DESCRIPTION OF THE EMBODIMENTS

The terms first, second, third, etc., are used to describe various parts, components, regions, layers, and/or sections but are not limited thereto. These terms are used only to distinguish one part, component, region, layer, or section from another. Therefore, a first part, component, region, layer, or section described hereinafter may be referred to as a second part, component, region, layer, or section within the scope of the present invention.

The professional terms used herein are intended to refer to specific embodiments only and are not intended to limit the present invention. The singular forms used herein include plural forms as well unless the context clearly indicates otherwise. The term "comprising/containing/including/having" as used in the specification specifies the presence of stated features, regions, integers, steps, operations, elements, and/or components, but does not preclude the presence or addition of other features, regions, integers, steps, operations, elements, components, and/or groups thereof.

When a part is described as being "on" or "above" another part, it may be directly on or above the other part, or intervening parts may be present. In contrast, when a part is described as being "directly on" another part, no intervening parts are present.

Unless defined otherwise, all terms including technical and scientific terms used herein have the same meaning as commonly understood by one of ordinary skill in the art to which this invention belongs. Terms defined in commonly used dictionaries should be interpreted as having meanings that are consistent with their meaning in the context of the relevant art and this disclosure, and should not be interpreted in an idealized or overly formal sense unless expressly so defined herein.

A positive electrode active material for a lithium secondary battery according to one embodiment may have a single particle structure with a D50 of 2 to 7 µm, and the number of grains measured within one particle by ASTAR analysis may be 20 or less. More specifically, the number of grains measured within one particle by ASTAR analysis may be in the range of 6 to 20, or 5 to 15.

A positive electrode active material with a single particle structure satisfying the range of the number of grains measured within one particle by ASTAR analysis has a longer lifespan than a positive electrode active material with a polycrystalline structure. Moreover, it can significantly reduce the rate of gas generation.

In particular, if the number of grains measured within one particle by ASTAR analysis exceeds the range, the capacity of the positive electrode active material decreases because the D50 size, which is the average diameter of the particles, increases, and the diffusion distance of electrons increases.

Therefore, in this embodiment, by providing a positive electrode active material that maintains the D50 size while keeping the grain size large, a lithium secondary battery with excellent electrochemical performance and improved lifespan retention can be implemented.

In other words, in this embodiment, it is intended to define that the degree of single particle formation is excellent if the number of grains measured within one particle by ASTAR analysis satisfies the range. In the case of NCM positive electrode material with excellent single particle formation, the occurrence of cracks is relatively low, and the lifespan characteristics are excellent.

When manufacturing a lithium secondary battery using such a positive electrode active material with excellent single particle formation, it is possible to secure lifespan characteristics at a level equal to or higher than that of using a polycrystalline positive electrode active material while reducing the rate of resistance increase.

Meanwhile, the grain size of the positive electrode active material by ASTAR analysis may be in the range of 500 nm to 5 µm, more specifically in the range of 1 µm to 3 µm. If the grain size satisfies the range, a positive electrode active material with a single particle structure that has a lifespan similar to that of a polycrystalline positive electrode active material while maintaining an appropriate D50 can be implemented.

If the grain size is less than 500 nm, the surface area of the metal oxide particles increases, leading to an increase in the rate of gas generation. Moreover, if the grain size exceeds 5 µm, the diffusion distance of lithium ions increases, resulting in a decrease in capacity.

In this specification, the ASTAR analysis shows the results performed using the equipment of JEOL JEM-2100F equipped with the ASTAR device of NanoMEGAS.

In this embodiment, the positive electrode active material may include a metal oxide particle containing nickel, cobalt, and manganese; and at least two doping elements doped into the metal oxide particles.

The doping elements may include at least two selected from the group consisting of Zr, Al, Nb, B, Ti, Ta, V, W, and Mo.

The selection of doping elements is important to secure lifespan and various electrochemical performances by doping lithium metal oxide. Known doping elements include monovalent ions such as Ag⁺ and Na⁺, and multivalent ions such as Co²⁺, Cu²⁺, Mg²⁺, Zn²⁺, Ba²⁺, Al³⁺, Fe³⁺, Cr³⁺, Ga³⁺, Zr⁴⁺, Ti⁴⁺. The impact of these elements on the lifespan and output characteristics of the battery varies.

In this embodiment, by including at least two selected from Zr, Al, Nb, B, Ti, Ta, V, W, and Mo among these doping elements, it is possible to secure high capacity while improving room temperature and high temperature lifespan characteristics and thermal stability, and significantly reducing initial resistance characteristics and resistance increase rate.

Specifically, Zr⁴⁺ acts as a kind of pillar because Zr ions occupy the Li site, alleviating the contraction of the lithium ion path during the charge and discharge process, leading to the stabilization of the layered structure. This phenomenon reduces cation mixing and increases the lithium diffusion coefficient, thereby increasing cycle life.

Moreover, Al³⁺ moves to the tetragonal lattice site, preventing the layered structure from deteriorating into a spinel structure. The layered structure facilitates the insertion and removal of Li ions, but the spinel structure does not facilitate the movement of Li ions.

In this embodiment, the doping amount of Zr may be 0.0005 mol to 0.005 mol per 1 mol of the total of nickel, cobalt, manganese, and doping elements, more specifically, in the range of 0.001 mol to 0.005 mol. If the Zr doping amount satisfies the range, the lifespan and room temperature lifespan characteristics of the lithium secondary battery can be significantly improved.

The doping amount of Al may be 0.001 mol to 0.008 mol per 1 mol of the total of nickel, cobalt, manganese, and doping elements, more specifically, in the range of 0.002 mol to 0.006 mol. If the content of Al satisfies the range, a lithium secondary battery with excellent lifespan characteristics and reduced resistance increase rate can be implemented.

A method for manufacturing a positive electrode active material according to another embodiment includes the steps of:
preparing a metal salt aqueous solution containing nickel raw material, cobalt raw material, manganese raw material, and water; supplying the metal salt aqueous solution to a coprecipitation reactor to obtain a metal hydroxide; and mixing the metal hydroxide particle, a lithium raw material, and a doping raw material, followed by sintering to obtain a lithium metal oxide; wherein the sintering step includes performing a first sintering process, and continuously performing a second sintering process at a temperature range 20°C to 100°C lower than the first sintering process.

In this embodiment, since the first sintering process and the second sintering process are performed as a continuous process, the production time of the positive electrode active material can be shortened, thereby improving economic efficiency by manufacturing more positive electrode active materials in the same time.

Moreover, since the temperatures of the first sintering process and the second sintering process are controlled as a continuous process, temperature setting is very important.

Specifically, the first sintering process is a step to increase the grain size of the positive electrode active material with a single particle structure. The first sintering process controls the temperature range so that the grains can sufficiently grow by heat-treating at a temperature about 50°C to 150°C higher than the temperature where the layered structure is stable. However, since maintaining this temperature for a long time can destroy the layered structure and reduce the electrochemical performance of the positive electrode active material, the first sintering process is maintained for as short a time as possible.

The next second sintering process is to recover the layered structure damaged during the first sintering process. Therefore, the second sintering process can be performed at a temperature range about 50°C to 150°C lower than the first sintering process. More specifically, the first sintering process and the second sintering process can be performed as a continuous process maintaining a temperature difference of 50°C to 80°C.

Next, the method for manufacturing a positive electrode active material according to this embodiment may further include a coating process to form a coating layer on the surface of the positive electrode active material after the second sintering process. By performing this coating process, it is possible to further improve the electrochemical performance of the positive electrode active material of this embodiment by controlling the residual lithium content present on the surface of the positive electrode active material.

Specifically, the coating process may be performed to include 1 mol to 2 mol of a coating element based on the total positive electrode active material, and the coating elements included in the coating layer may include Co and Al.

In another embodiment of the present invention, a lithium secondary battery comprising a positive electrode including the positive electrode active material according to one embodiment of the present invention, a negative electrode including a negative electrode active material, and an electrolyte positioned between the positive electrode and the negative electrode is provided.

The description related to the positive electrode active material is omitted because it is the same as that of one embodiment of the present invention described above.

The positive electrode active material layer may include a binder and a conductive material.

The binder serves to adhere the positive electrode active material particles to each other and to adhere the positive electrode active material to the current collector.

The conductive material is used to impart conductivity to the electrode, and any electronically conductive material that does not cause chemical changes in the battery can be used.

The negative electrode includes a current collector and a negative electrode active material layer formed on the current collector, and the negative electrode active material layer includes a negative electrode active material.

The negative electrode active material may include a material capable of reversibly intercalating/deintercalating lithium ions, lithium metal, an alloy of lithium metal, a material capable of doping and dedoping lithium, or a transition metal oxide.

The material capable of reversibly intercalating/deintercalating lithium ions may be a carbon material, and any carbon-based negative electrode active material commonly used in lithium ion secondary batteries can be used, with representative examples including crystalline carbon, amorphous carbon, or a combination thereof.

The alloy of lithium metal may be an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x < 2), Si-Y alloy (where Y is an element selected from the group consisting of alkali metals, alkaline earth metals, group 13 elements, group 14 elements, transition metals, rare earth elements, and combinations thereof, and is not Si), Sn, SnO₂, Sn-Y (where Y is an element selected from the group consisting of alkali metals, alkaline earth metals, group 13 elements, group 14 elements, transition metals, rare earth elements, and combinations thereof, and is not Sn), etc.

The transition metal oxide may include vanadium oxide, lithium vanadium oxide, etc. The negative electrode active material layer also includes a binder and may further include a conductive material optionally.

The binder serves to adhere the negative electrode active material particles to each other and to adhere the negative electrode active material to the current collector.

The conductive material is used to impart conductivity to the electrode, and any electronically conductive material that does not cause chemical changes in the battery can be used.

The current collector may be selected from the group consisting of copper foil, nickel foil, stainless steel foil, titanium foil, nickel foam, copper foam, polymer substrates coated with conductive metal, and combinations thereof.

The negative electrode and the positive electrode are manufactured by mixing the active material, conductive material, and binder in a solvent to prepare an active material composition, and applying this composition to the current collector. Since such electrode manufacturing methods are widely known in the art, detailed descriptions are omitted in this specification. The solvent may include N-methylpyrrolidone, but is not limited thereto.

The electrolyte may include organic liquid electrolytes, inorganic liquid electrolytes, solid polymer electrolytes, gel-type polymer electrolytes, solid inorganic electrolytes, molten inorganic electrolytes, etc., which can be used for manufacturing lithium secondary batteries, but are not limited thereto.

Specifically, the organic liquid electrolyte may include an organic solvent and a lithium salt.

The organic solvent acts as a medium through which ions involved in the electrochemical reaction of the battery can move.

The lithium salt is a substance that, when dissolved in an organic solvent, acts as a source of lithium ions in the battery, enabling the basic operation of the lithium secondary battery, and facilitating the movement of lithium ions between the positive electrode and the negative electrode.

Depending on the type of lithium secondary battery, a separator may be present between the positive electrode and the negative electrode. Such separators may include polyethylene, polypropylene, polyvinylidene fluoride, or multilayer films of two or more layers thereof, and mixed multilayer films such as polyethylene/polypropylene two-layer separators, polyethylene/polypropylene/polyethylene three-layer separators, polypropylene/polyethylene/polypropylene three-layer separators, etc., may be used.

Lithium secondary batteries can be classified into lithium ion batteries, lithium ion polymer batteries, and lithium polymer batteries depending on the type of separator and electrolyte used, and can be classified into cylindrical, prismatic, coin, pouch, etc., depending on the form, and can be divided into bulk type and thin film type depending on the size. Since the structure and manufacturing method of these batteries are widely known in the field, detailed descriptions are omitted.

### DETAILED DESCRIPTION OF THE EMBODIMENTS

Hereinafter, embodiments of the present invention will be described in detail. However, these are presented by way of example and are not intended to limit the present invention, which is defined only by the scope of the claims to be described later.

### Example 1 - Single Particle Positive Electrode Active Material

### (1) Preparation of Precursor

A precursor was prepared by a typical coprecipitation method.

Specifically, NiSO₄·6H₂O was used as the nickel raw material, CoSO₄·7H₂O as the cobalt raw material, and MnSO₄·H₂O as the manganese raw material. These raw materials were dissolved in distilled water to prepare a metal salt aqueous solution.

After preparing a coprecipitation reactor, N₂ was purged to prevent oxidation of metal ions during the coprecipitation reaction, and the reactor temperature was maintained at 50°C.

NH₄(OH) was introduced into the coprecipitation reactor as a chelating agent, and NaOH was used for pH adjustment. The precipitate obtained from the coprecipitation process was filtered, washed with distilled water, and dried in an oven at 100°C for 24 hours to prepare a positive electrode active material precursor.

The composition of the prepared precursor was (Ni₀.₉₅₅Co₀.₀₂Mn₀.₀₂Al₀.₀₅)(OH)₂, and the average particle diameter D50 was about 4 µm.

### (2) Preparation of Positive Electrode Active Material

The precursor prepared in step 1 was uniformly mixed with LiOH·H₂O (Samchun Chemicals, battery grade), ZrO₂ (Aldrich, 4N), and Al(OH)₃ (Aldrich, 4N), and the mixture was sintered in a box-type furnace where oxygen was introduced at 1,000 mL/min.

Sintering involved performing a first sintering process at 850°C for 3.75 hours, followed by a second sintering process at 790°C for 9.75 hours.

At this time, the molar ratio of lithium (Li) to the total metal (Me) excluding lithium was designed to be 1.01, and the doping amount was adjusted based on LiNi₀.₉₅₅Co₀.₀₂Mn₀.₀₂Al₀.₀₅O₂ without doping metal elements, denoted as M=Ni₀.₉₅₅Co₀.0₂Mn₀.0₂Al₀.₀₅, and the total of M and the doped amount was adjusted to be 1 mol. Thus, it has a structure of Li(M)₁₋ₓ(D)ₓO₂ (M=NCMA, D=doping material).

Next, the sintered material was ground into powder using a rotor mill or jet mill, mixed with Al and Co raw materials, and heat-treated at 680 to 700°C for 5 hours to prepare a positive electrode active material with a coating layer.

The positive electrode active material of Example 1 thus prepared had a single particle structure as defined in the present invention, and the overall composition was Li(M)₀.₉₉₅Zr₀.₀₀₁Al₀.₀₀₄O₂.

### Example 2

A positive electrode active material was prepared in the same manner as Example 1, except that the first sintering process was performed at 890°C and the second sintering process was performed at 790°C.

### Example 3

A positive electrode active material was prepared in the same manner as Example 1, except that the first sintering process was performed at 850°C and the second sintering process was performed at 820°C.

### Comparative Example 1

The precursor, lithium raw material, and doping raw material prepared in Example 1 were uniformly mixed and sintered in a roller hearth kiln (hereinafter RHK) where oxygen was introduced at 1,000 mL/min. The sintering conditions were maintained at 765°C for 12 hours, with a heating rate of 3°C/min.

LiOH·H₂O (Samchun Chemicals, battery grade) was used as the lithium raw material, and ZrO₂ (Aldrich, 3N) and Al(OH)₃ (Aldrich, 3N) were used as doping raw materials.

At this time, the molar ratio of lithium (Li) to the total metal (Me) excluding lithium was designed to be 1.03, and the doping amount was adjusted based on LiNi₀.₉₂Co₀.₀₄Mn₀.₀₄O₂ without doping metal elements, denoted as M=Ni₀.₉₂Co₀.₀₄Mn₀.₀₄, and the total of M and the doped amount was adjusted to be 1 mol. Thus, it has a structure of Li(M)₁₋ₓ(D)ₓO₂ (M=NCMA, D=doping material). The overall composition of the positive electrode active material of Comparative Example 1 thus prepared was Li(M)₀.₉₉₃Zr₀.₀₀₂Al₀.₀₀₅O₂, and it had a polycrystalline structure.

### Comparative Example 2

A precursor was prepared in the same manner as in Example 1, except that in the precursor preparation process, the average particle diameter D50 was controlled to be about 15 µm.

Next, a positive electrode active material with a polycrystalline structure was prepared in the same manner as in Comparative Example 1 using the precursor.

### Experimental Example 1 - Measurement of Lifespan Characteristics

### (1) Preparation of Coin Half-Cell

A CR2032 coin cell was manufactured using the positive electrode active material prepared as described above, and electrochemical evaluation was conducted.

Specifically, the positive electrode active material, conductive material (Denka Black), and polyvinylidene fluoride binder (product name: KF1120) were mixed in a weight ratio of 96.25:1.65:2.1, and this mixture was added to an N-Methyl-2-pyrrolidone (NMP) solvent to prepare a positive electrode active material slurry with a solid content of about 30% by weight.

The slurry was coated onto an aluminum foil (Al foil, thickness: 10 µm) as the positive electrode current collector using a doctor blade, dried, and rolled to prepare the positive electrode. The loading amount of the positive electrode was about 15 mg/cm², and the rolling density was about 3.5 g/cm³.

A 2032 coin half-cell was manufactured by a conventional method using the positive electrode, a lithium metal negative electrode (thickness 300 µm, MTI), an electrolyte, and a polypropylene separator. The electrolyte was prepared by dissolving 1M LiPF₆ in a mixed solvent of ethylene carbonate, dimethyl carbonate, and ethyl methyl carbonate (EMC) (mixing ratio EC:DMC:EMC=3:4:3 volume%) and adding 3% by weight of vinylene carbonate (VC).

### (2) Evaluation of Charge and Discharge Characteristics

The coin half-cell manufactured in step (1) was aged at room temperature (25°C) for 10 hours, and then charge and discharge tests were conducted.

The capacity was evaluated based on 200 mAh/g, and the charge and discharge conditions were constant current (CC) / constant voltage (CV) 2.5V to 4.25V, with a 1/20C cut-off applied. The initial capacity was measured by charging and discharging at 0.1C.

### (3) Evaluation of Lifespan Characteristics

The lifespan characteristics of the positive electrode active materials prepared according to Examples 1 to 3 and Comparative Examples 1 and 2 were measured at a high temperature (45°C) under 0.5C charge/1C discharge conditions for 30 cycles and 50 cycles, respectively.

### (4) Measurement of Resistance Characteristics

The initial resistance at room temperature (direct current internal resistance: DC-IR) was calculated by applying a discharge current after charging the cell to 100% at 4.25V under constant current-constant voltage 2.5V to 4.25V, 1/20C cut-off conditions at 25°C, and measuring the voltage value 60 seconds later.

The resistance increase rate was calculated by measuring the resistance in the same manner as the initial resistance measurement after 30 and 50 cycles of lifespan at a high temperature (45°C) compared to the initial resistance (room temperature initial resistance) measured initially, and converting the increase rate into a percentage (%).

**(Table 1)**

| | Charge Capacity (mAh/g) | Discharge Capacity (mAh/g) | Initial Efficiency (%) | Capacity Retention (%) | | Resistance Increase (%) | |
|---|---|---|---|---|---|---|---|
| | | | | 30th | 50th | 30th | 50th |
| Example 1 | 244.9 | 216.3 | 88.3 | 95.6 | 93.48 | 44.5 | 79.2 |
| Example 2 | 243.6 | 216.4 | 88.8 | 95.7 | 93.7 | 48.7 | 84.5 |
| Example 3 | 244.0 | 215.0 | 88.1 | 95.5 | 93.14 | 51.6 | 91.0 |
| Comparative Example1 | 244.6 | 226.1 | 92.5 | 91.4 | 88.3 | 68.5 | 97.6 |
| Comparative Example2 | 243.9 | 220.7 | 90.5 | 91.4 | 87.4 | 60.4 | 95.2 |

Referring to Table 1, it can be confirmed that the positive electrode active materials manufactured according to Examples 1 to 3 exhibit superior lifespan characteristics compared to the positive electrode active materials of Comparative Examples 1 and 2, despite having a single particle structure. Furthermore, when compared to the positive electrode active materials of Comparative Examples 1 and 2, the rate of resistance increase in the positive electrode active materials manufactured according to Examples 1 to 3 is significantly reduced.

### Experimental Example 2 - Grain Size Measurement

The grain size of the positive electrode active materials manufactured according to Examples 1 to 3 and Comparative Examples 1 to 2 was measured using the JEOL JEM-2100F equipment equipped with a NanoMEGAS ASTAR device. The results are shown in Table 2 below.

**(Table 2)**

| Type | Grain Size (µm) |
|---|---|
| Example 1 | 1.46 |
| Example 2 | 1.36 |
| Example 3 | 1.03 |
| Comparative Example 1 | 0.57 |
| Comparative Example 2 | 0.95 |

### Experiment Example 3 - Analysis of Positive Electrode Active Material Structure

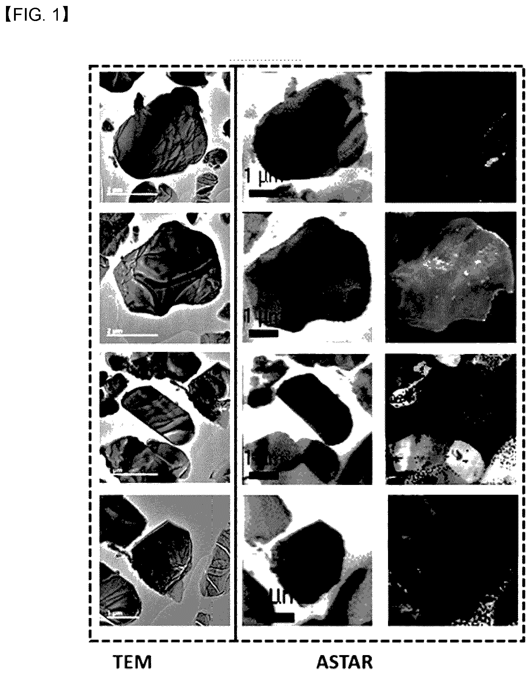

The TEM images and ASTAR image measurement results of the positive electrode active materials prepared according to Examples 1 to 3 and Comparative Example 1 are shown in FIG. 1 to FIG. 4, respectively.

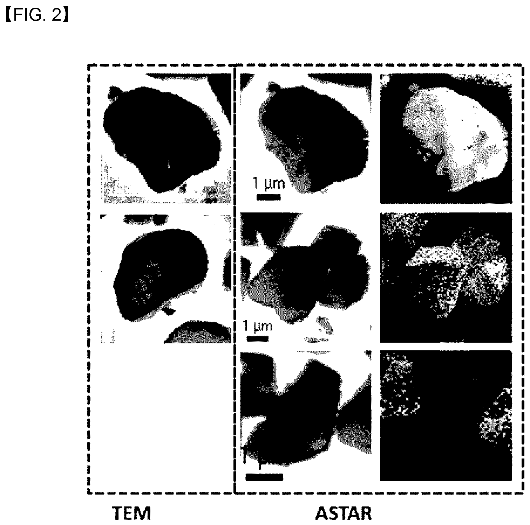

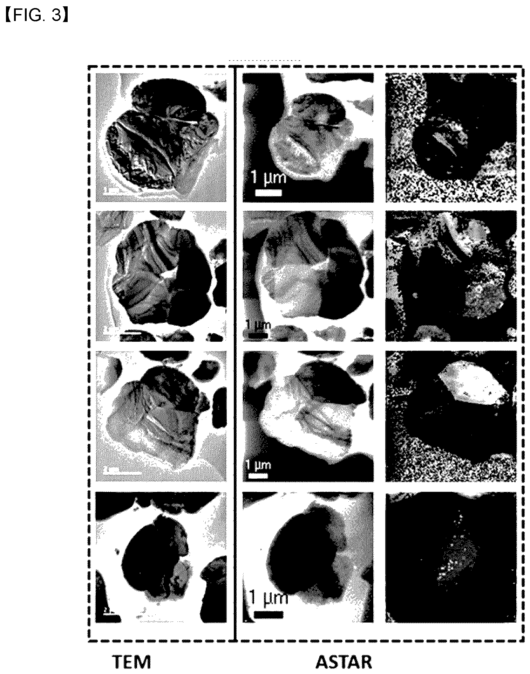

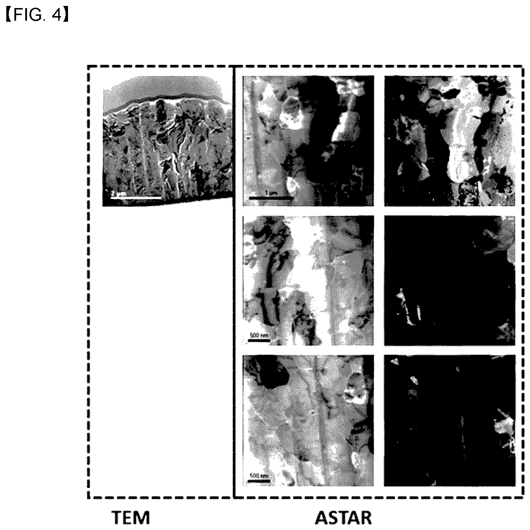

Specifically, FIG. 1 is the TEM image and ASTAR image of the positive electrode active material prepared according to Example 1. FIG. 2 is the TEM image and ASTAR image of the positive electrode active material prepared according to Example 2. FIG. 3 is the TEM image and ASTAR image of the positive electrode active material prepared according to Example 3. Additionally, FIG. 4 is the TEM image and ASTAR image of the positive electrode active material prepared according to Comparative Example 1.

In the TEM images, it is difficult to distinguish the grains present within the particles, making it challenging to determine the size and number of grains. However, when utilizing the ASTAR technique, such distinctions become clear, facilitating the comparison of the size and number of grains. Referring to the ASTAR images of FIG. 1 to FIG. 3, it can be confirmed that the number of grains measured within a single particle is very small. In contrast, referring to the ASTAR image of FIG. 4, it can be seen that there are a larger number of grains compared to the examples.

**(Table 3)**

| Type | Number of Grains Measured Within One Particle |
|---|---|
| Example 1 | 1.75 |
| Example 2 | 2.33 |
| Example 3 | 6.25 |
| Comparative Example1 | 39 more |

The present invention is not limited to the embodiments described above and may be manufactured in various different forms. It will be understood by those skilled in the art to which the present invention pertains that the present invention can be implemented in other specific forms without altering the technical spirit or essential characteristics of the invention. Therefore, the embodiments described above should be considered in all respects as illustrative and not restrictive.

## Claims

1. A positive electrode active material for a lithium secondary battery, **characterized in that** it has a single particle structure with a D50 of 2 to 7 µm and the number of grains measured within one particle is 20 or less as determined by ASTAR analysis.

2. The positive electrode active material for a lithium secondary battery according to claim 1, wherein the number of grains measured within one particle is in the range of 5 to 20 as determined by ASTAR analysis.

3. The positive electrode active material for a lithium secondary battery according to claim 1, wherein the grain size of the positive electrode active material is 500 nm to 5 µm.

4. The positive electrode active material for a lithium secondary battery according to claim 1,
wherein the positive electrode active material comprises a metal oxide particle containing nickel, cobalt, and manganese; and at least two doping elements doped into the metal oxide particle.

5. The positive electrode active material for a lithium secondary battery according to claim 4, wherein the doping elements include at least two selected from the group consisting of Zr, Al, Nb, B, Ti, Ta, V, W, and Mo.

6. The positive electrode active material for a lithium secondary battery according to claim 5, wherein the doping amount of Zr is 0.0005 mol to 0.005 mol per 1 mol of the total of nickel, cobalt, manganese, and doping elements.

7. The positive electrode active material for a lithium secondary battery according to claim 5, wherein the doping amount of Al is 0.001 mol to 0.008 mol per 1 mol of the total of nickel, cobalt, manganese, and doping elements.

8. A method for manufacturing a positive electrode active material, comprising the steps of:
preparing a metal salt aqueous solution containing nickel raw material, cobalt raw material, manganese raw material, and water;
supplying the metal salt aqueous solution to a coprecipitation reactor to obtain a metal hydroxide; and
mixing the metal hydroxide particle, a lithium raw material, and a doping raw material, followed by sintering to obtain a lithium metal oxide;
wherein the sintering step comprises:
performing a first sintering process, and
continuously performing a second sintering process at a temperature range 50°C to 150°C lower than the first sintering process.

9. The method for manufacturing a positive electrode active material according to claim 8,
wherein the first sintering process is performed at a temperature range of 800°C to 890°C for 3 to 5 hours.

10. The method for manufacturing a positive electrode active material according to claim 8,
wherein the second sintering process is performed at a temperature range of 750°C to 800°C for 9 to 20 hours.

11. The method for manufacturing a positive electrode active material according to claim 8,
wherein the first sintering process and the second sintering process are performed as a continuous process maintaining a temperature difference of 50°C to 80°C.

12. The method for manufacturing a positive electrode active material according to claim 8,
further comprising a coating process to form a coating layer on the surface of the positive electrode active material after the second sintering process.

13. The method for manufacturing a positive electrode active material according to claim 12,
wherein the coating process is performed to include 1 mol to 2 mol of a coating element based on the total positive electrode active material.

14. The method for manufacturing a positive electrode active material according to claim 12,
wherein the coating element included in the coating layer comprise Co and Al.

15. A lithium secondary battery comprising a positive electrode including the positive electrode active material according to any one of claims 1 to 7.
